# EUROPÄISCHE PATENTANMELDUNG

(11) **EP 2 323 193 A2**
(43) Veröffentlichungstag der Anmeldung: **18.05.2011**
(21) Anmeldenummer: 10189672.8
(22) Anmeldetag: 02.11.2010
(51) Int. Cl.: H01M 2/10, H01M 10/50

(54) **Tragbare Batterieanordnung und Behälter für Batterie**

(30) Priorität: 12.11.2009 DE 102009052975
(71) Anmelder: GARDENA Manufacturing GmbH, 89079 Ulm (DE)
(72) Erfinder: Lameli, Peter, 72662, Nürtingen (DE); Waigel, Hans, 89194, Schnürpflingen (DE)

(57) **Zusammenfassung**

Zum Schutz einer elektrochemischen Zelle einer in ein elektrisch betriebenes Gerät einsetzbaren Batterie gegen eine leistungsmindernde Auskühlung der Zelle während eines vom Gerät getrennten Transport- oder Lagervorgangs wird eine Anordnung der Batterie in einem thermisch isolierenden Behälter vorgeschlagen. Der Behälter besteht vorzugsweise aus einem flexiblen, thermisch isolierenden Material, insbesondere einem geschäumten Elastomer. In vorteilhafter Weiterbildung ist vorgesehen, zusätzlich eine in den Behälter und/oder in die Batterie integrierte Heizeinrichtung vorzusehen, welche aus der Batterie selbst gespeist wird. Durch die thermische Isolierwirkung des Behälters kann die aus der Batterie entnommene elektrische Energie besonders gering gehalten werden.

## Beschreibung

Die Erfindung betrifft eine Batterieanordnung mit einer Batterie und einem die Batterie umgebenden Behälter sowie einen Batteriebehälter dafür.

In tragbaren, elektromotorisch angetriebenen Arbeitsgeräten kommen zunehmend wieder aufladbare Batterien (Akkus) zum Einsatz, wobei wegen der gewichtsbezogen besonders hohen Energiedichte Batterien mit Li-Ionen-Zellen als elektrochemischen Elementen besonders vorteilhaft sind. Insbesondere diese zeigen allerdings bei tiefen Temperaturen einen starken Abfall der Kapazität im Sinne der entnehmbaren elektrischen Leistung und Energie. Dies ist insbesondere dann von Bedeutung, wenn eine solche Batterie vor ihrem Einsatz im Gerät einer Umgebung mit tiefen Außentemperaturen, beispielsweise beim Transport zu einem Einsatzort ausgesetzt ist. Es ist bekannt, bei solchen Li-lonen-Batterien in das Batteriegehäuse eine Heizeinrichtung mit einem auf die Li-lonen-Zelle wirkenden Heizelement und einer Regelelektronik zu integrieren. Die Heizeinrichtung ist aus der Li-lonen-Zelle selbst mit elektrischer Energie versorgt.

Die GB 2 448 292 A schlägt vor, zur Verlängerung der Lebensdauer einer Batterie diese mit einer faltbaren thermisch isolierenden Umhüllung zu versehen. In der US 2007/0 212 597 A1 ist eine Batterieanordnung beschrieben, bei welcher eine oder mehrere Zellen innerhalb eines Batteriegehäuses in thermisch isolierendes Material eingebettet und mit einer aus der Batterie selbst gespeisten Heizung versehen sind, um die Einsatzfähigkeit der Batterie auch bei tiefen Umgebungstemperaturen zu verbessern. Allerdings nimmt dadurch das von der Batterie im Gerät benötigte Volumen erheblich zu. Eine vergleichbare Anordnung ist in der US 6 440 602 B1 beschreiben.

Aufgabe der vorliegenden Erfindung ist es, eine Batterieanordnung mit einer Batterie und einem diese umgebenden Behälter sowie einen Behälter zur Verwendung in einer solchen Batterieanordnung anzugeben, welche vorteilhaft für die im Gerät nutzbare Batteriekapazität sind.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Durch die Anordnung der Batterie in einem thermisch isolierenden Behälter kann die Batterie gegen zu starkes und schnelles Auskühlen bei tiefen Umgebungstemperaturen geschützt werden. Besonders vorteilhaft ist die Anordnung der Batterie in dem thermisch isolierenden Behälter in Verbindung mit einer aus der Batterie selbst gespeisten, vorzugsweise geregelten Heizeinrichtung, welche nach Maßgabe der Temperatur der elektrochemischen Zelle Wärme erzeugt, welche in der Art auf die Zelle einwirkt, dass deren Temperatur nicht oder weniger schnell sinkt. Die wenigstens eine elektrochemische Zelle der Batterie ist vorzugsweise eine an sich bekannte und gebräuchliche Li-lonen-Zelle.

Der Behälter ist zumindest an seinem überwiegenden Flächenanteil der die Batterie umgebenden Hüllfläche thermisch isolierend ausgeführt, wobei als thermisch isolierend gelten soll, wenn die in W/(K cm²) gemessene Wärmedurchgangszahl des thermisch isolierenden Materials des Behälters in einem Flächenbereich höher ist als die Wärmedurchgangszahl des Batteriegehäuses an der dem Flächenbereich zuweisenden Stelle.

Der Behälter besteht vorteilhafterweise zumindest in seinem überwiegenden Flächenanteil der die Batterie umgebenden Hüllfläche aus einem flexiblen Material, welches vorzugsweise in Form einer oder mehrerer flacher Bahnen mit gleichbleibender Dicke vorliegt. Solches Bahnmaterial ist besonders kostengünstig verfügbar. Mehrere flache Bahnen können durch Verbinden, insbesondere Verkleben und/oder Vernähen entlang von Kanten zu einem Behälter verbunden sein. Der Behälter ist vorzugsweise taschenförmig, insbesondere mit einer verschließbaren Öffnung zum Entnehmen und Einsetzen einer Batterie ausgeführt.

Als thermisch isolierendes flexibles Material ist vorzugsweise ein geschäumtes Elastomer eingesetzt, wie beispielsweise das unter dem Handelsnamen Neopren bekannte geschäumte Elastomer. Das geschäumte Elastomer ist vorteilhafterweise zumindest auf der Außenseite des Behälters mit einem Textilgewebe kaschiert. Die Verwendung eines geschäumten Elastomers für den Behälter hat den zusätzlichen vorteilhaften Effekt, dass durch die elastische Kompressibilität ein Schutz des umhüllten Batteriegehäuses gegen Beschädigung durch Stöße gegeben ist.

Vorteilhafterweise besitzt der Behälter eine reversibel verschließbare Öffnung, durch welche die Batterie eingesetzt bzw. entnommen werden kann. Der Behälter kann auch auffaltbar die Batterie zumindest überwiegend freigeben.

In erster vorteilhafter Ausführung, insbesondere wenn die Batterie in einem Gerätegehäuse an ihren überwiegenden oder allen Wandflächen von dem Gerätegehäuse umgeben ist, ist die Batterie vollständig von dem Behälter lösbar nd der Behälter erforderlichenfalls für eine andere, z. B. ausgetauschte Batterie benutzbar. In anderer Ausführung kann vorgesehen sein, dass der Behälter an einem Teil der Wandflächen der Batterie verbleibt, wenn die Batterie mit einem Gerätegehäuse verbunden wird, was insbesondere von Vorteil sein kann, wenn bei mit dem Gerätegehäuse in Betriebsstellung verbundener Batterie große Teile der Wandflächen nicht durch das Gerätegehäuse abgedeckt sind.

Der Behälter kann vorteilhafterweise Tragvorrichtungen zum Tragen der Batterieanordnung am Körper einer Person aufweisen, so dass der Behälter insbesondere auch für die Bereithaltung einer Ersatzbatterie bzw. Aufnahme einer erschöpften und ausgetauschten Batterie dienen kann. Die Verwendung eines geschäumten Elastomers als Material des Behälters trägt zum Tragekomfort der Batterieanordnung bei. Die Tragvorrichtungen können insbesondere einen Tragegurt und/oder eine Gürtelbefestigung umfassen.

Die thermisch isolierende Ausbildung des Behälters ist von besonderem Vorteil in Verbindung mit einer in dem Behälter oder die Batterie integrierten Heizeinrichtung. In erster vorteilhafter Ausführung kann eine solche Heizeinrichtung einen zwischen den Behälter und das Batteriegehäuse eingefügten Wärmespeicher, insbesondere mit einem einen Phasenübergang mit Wärmeabgabe vollziehenden Speichermaterial enthalten.

Bei der besonders vorteilhaften Kombination einer aus der Batterie selbst gespeisten, auf das wenigstens eine elektrochemische Element wirkenden Heizeinrichtung mit dem thermisch isolierenden Material des Behälters kann durch die thermisch isolierende Wirkung des Behälters die dem elektrochemischen Element entnommene und an sich dessen Kapazität verringernde elektrische Energiemenge vorteilhafterweise besonders gering gehalten werden.

Die Heizeinrichtung kann in Form einer Behälter-Heizeinrichtung als Teil des Behälters ausgebildet und n diesen integriert sein. Zur Zuführung elektrischer Energie der Batterie zu der Behälter-Heizeinrichtung enthält der Behälter zu Kontakten der Batterie passende komplementäre Gegenkontakte und wenigstens ein Heizelement, welches mit den Gegenkontakten elektrisch verbunden ist. Das Heizelement ist vorteilhafterweise an der der Batterie zugewandten Innenseite des Behälters auf dem isolierenden Material angeordnet, so dass der Wärmeverlust nach außen durch das isolierende Material gering gehalten wird. Das Heizelement kann beispielsweise durch eine auf das isolierende Material aufgebrachte elektrische Widerstandsschicht oder insbesondere durch eine aufgeklebte, an sich bekannte Heizfolie gebildet sein. Die Heizleistung des Heizelements ist vorteilhafterweise veränderbar, wofür eine Sensoranordnung mit wenigstens einem Temperatursensor zur Messung der Umgebungstemperatur und/oder der Temperatur innerhalb des Behälters oder innerhalb des Batteriegehäuses und eine elektronische Steuerschaltung vorgesehen sein kann. Mehrere Temperatursensorwerte können gemeinsam zur Einstellung der elektrischen Leistungsaufnahme des Heizelements vorgesehen sein. Die Steuerschaltung kann mit dem Behälter verbunden oder in das Batteriegehäuse integriert oder in zwei Teilschaltungen im Behälter und im Batteriegehäuse aufgeteilt sein.

Eine Verbindung der Gegenkontakte auf Seiten des Behälters mit den Kontakten der Batterie kann automatisch beim Einsetzen der Batterie in den Behälter erfolgen, insbesondere bei am Boden eines taschenförmig ausgebildeten Behälters angeordneten Gegenkontakten. In anderer Ausführung können die Gegenkontakte zur manuellen Verbindung mit den Kontakten der Batterie ausgebildet sein.

Bei einer in das Batteriegehäuse integrierten Batterie-Heizeinrichtung kann diese vorteilhafterweise ein mit besonders effektivem Energieeinsatz direkt bei der elektrochemischen Zelle angeordnetes, beispielsweise die Zelle umgebendes Heizelement enthalten. Eine solche integrierte Batterie-Heizeinrichtung kann vorteilhafterweise auch in Einsatzpausen des Geräts ohne Entnahme der Batterie eine zu starke Abkühlung der Zelle verhindern. Um zu vermeiden, dass bei einer weder im Gerät noch im Behälter befindlichen Batterie bei niedriger Umgebungstemperatur die in das Batteriegehäuse integrierte Batterie-Heizeinrichtung durch starken Wärmeabfluss in die kalte Umgebung unerwünscht viel elektrische Energie aus der Zelle entnimmt, kann in vorteilhafter Weiterbildung vorgesehen sein, dass an dem Behälter Aktivierungsmittel vorgesehen sind, über welche die Batterie-Heizeinrichtung bei in den Behälter eingesetzter Batterie aktivierbar ist. Bei frei liegender Batterie sei die Batterie-Heizeinrichtung deaktiviert oder allenfalls in einen Schutzmodus mit reduzierter Heizleistung versetzt.

Die Aktivierungsmittel können beispielsweise mechanische Schaltelemente an dem Batteriegehäuse enthalten, welche vorzugsweise beim Einsetzen der Batterie in den Behälter automatisch betätigt werden. In anderer Ausführung können die Aktivierungsmittel auf Seiten des Behälters Gegenkontakte zu Kontakten der Batterie umfassen, über welche ein Steuer- oder Sensorkontakt der Batterie mit einem entsprechenden Signal beaufschlagbar, beispielsweise auf das Potential eines der Batteriepole setzbar ist.

Vorzugsweise wirken die Aktivierungsmittel berührungslos mit der in das Batteriegehäuse integrierten Batterie-Heizeinrichtung zusammen. Die Batterie enthält hierfür vorteilhafterweise einen Näherungssensor, welcher insbesondere magnetisch mit den Aktivierungsmitteln in Wechselwirkung treten kann. Die Aktivierungsmittel können hierfür vorteilhafterweise wenigstens ein magnetisches Element, insbesondere ein weichmagnetisches Element oder vorzugsweise ein Permanentmagnetelement enthalten. Äquivalente Aktivierungsmittel können vorteilhafterweise in einer Batterieaufnahme des Geräts vorgesehen sein, um auch bei in das Gerät eingesetzter Batterie die Batterie-Heizeinrichtung zu aktivieren.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Batteriebehälter mit Batterie in zwei Situationen,
- Fig. 2: einen weiteren Batteriebehälter und eine Batterie,
- Fig. 3: einen Schnitt durch eine Ausführung nach Fig. 2,
- Fig. 4: eine Darstellung einer Ausführung mit Wärmespeicher,
- Fig. 5: eine Ausführung mit Behälter-Heizeinrichtung,
- Fig. 6: eine Ausführung mit Batterie-Heizeinrichtung
- Fig. 7: eine Batterieanordnung mit teilweise lösbarem Behälter,
- Fig. 8: die Batterieanordnung nach Fig. 7 an einem Gerät.

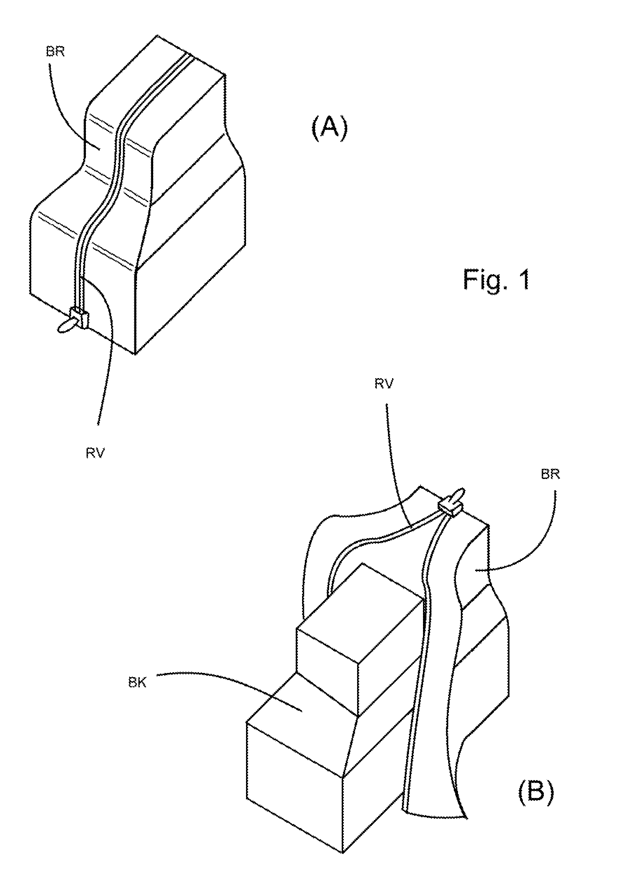

Fig. 1 zeigt eine vorteilhafte erste Ausführung einer Kombination einer Batterie mit einem verschließbaren Behälter BR, wobei in Fig. 1 (A) die Batterie vollständig in den Behälter eingesetzt und dieser verschlossen ist, so dass die in dieser Situation nicht sichtbare Batterie im wesentlichen allseitig von dem Behälter umgeben ist.

In Fig. 1 (B) ist der Behälter BR in einer geöffneten Situation mit teilweise durch die Behälteröffnung entnommener Batterie BK dargestellt. die Behälteröffnung ist im skizzierten Beispiel durch einen Reißverschluß RV verschließbar. Andere Möglichkeiten zum reversiblen Verschließen der Behälteröffnung, insbesondere mittels Klettverschluss, Kordel, Schnalle usw. sind an sich bekannt.

Der Behälter besteht vorteilhafterweise zumindest an den Wandflächen, welche zur Entnahme bzw. dem Einsetzen der Batterie BK gegenüber der geschlossenen Situation nach Fig. 1 (A) verlagert werden, aus einem flexiblen, gegebenenfalls auch elastisch dehnbaren Material. Das flexible Material liegt vorteilhafterweise in flacher Bahnform vor, wobei mehrere Bahnabschnitte entlang von Kanten des Behälters miteinander verbunden sein können. Die Form des Behälters BR ist vorteilhafterweise der Form der Batterie BK angepasst. Das Material der Behälterwände ist vorteilhafterweise thermisch stärker isolierend als die Wände des Batteriegehäuses der Batterie BK und kann in bevorzugter Ausführungsform ein geschäumtes Elastomer sein.

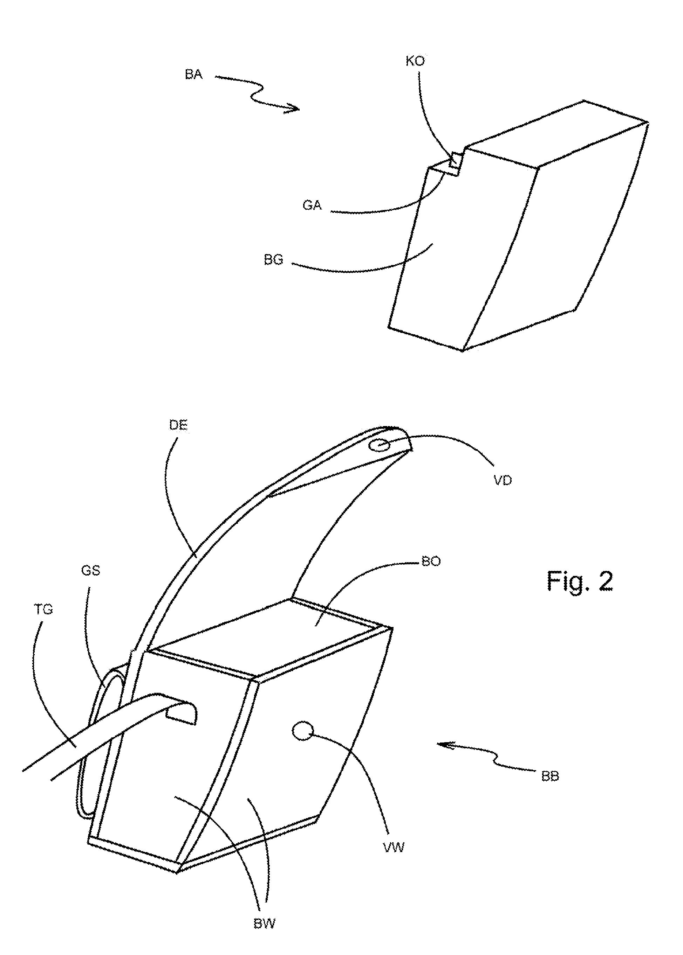

Fig. 2 zeigt in perspektivischer Darstellung schematisch eine Batterie BA und einen Behälter BB, welcher taschenförmig ausgeführt ist und eine Behälteröffnung BO zum Einsetzen bzw. Entnehmen der Batterie BA aufweist. Die Behälteröffnung ist durch einen beweglich und dauerhaft mit dem taschenförmigen Teil verbundenen Deckel DE verschließbar. Am Deckel DE und an einer Wand des Behälters BB können korrespondierende Verschlusseinrichtungen VD, VW vorgesehen sein.

An dem Behälter sind zum Tragen der aus Behälter BB und eingesetzter Batterie BA bestehenden Batterieanordnung am Körper einer Person geeignete Tragvorrichtungen in Form eines an zwei gegenüber liegenden Seitenwänden des Behälters befestigten Tragegurts GT und/oder einer Gürtelschlaufe GS oder dergleichen schematisch mit dargestellt.

Die Wände BW und der Deckel DE des Behälters BB sind vorteilhafterweise durch flache Bahnen aus einem thermisch isolierenden Material, insbesondere aus einem flexiblen geschäumten Elastomer gebildet und entlang von Kanten miteinander zu der Taschenform des Behälters BB verbunden. Vorteilhafterweise ist ein als thermisch isolierendes Material eingesetztes geschäumtes Elastomer auf wenigstens einer Bahnseite mit einem Textilgewebe kaschiert. Die Behälterform ist vorteilhafterweise an die Außenform der Batterie BA angepaßt. Die Batterie weist in der dargestellten Bauform annähernd eine Quaderform auf. An einer Kante sei eine Gehäuseaussparung GA gegenüber der Quaderform vorgesehen. In der Gehäuseaussparung GA können vorteilhafterweise Kontakte KO der Batterie in geschützter Anordnung untergebracht sein.

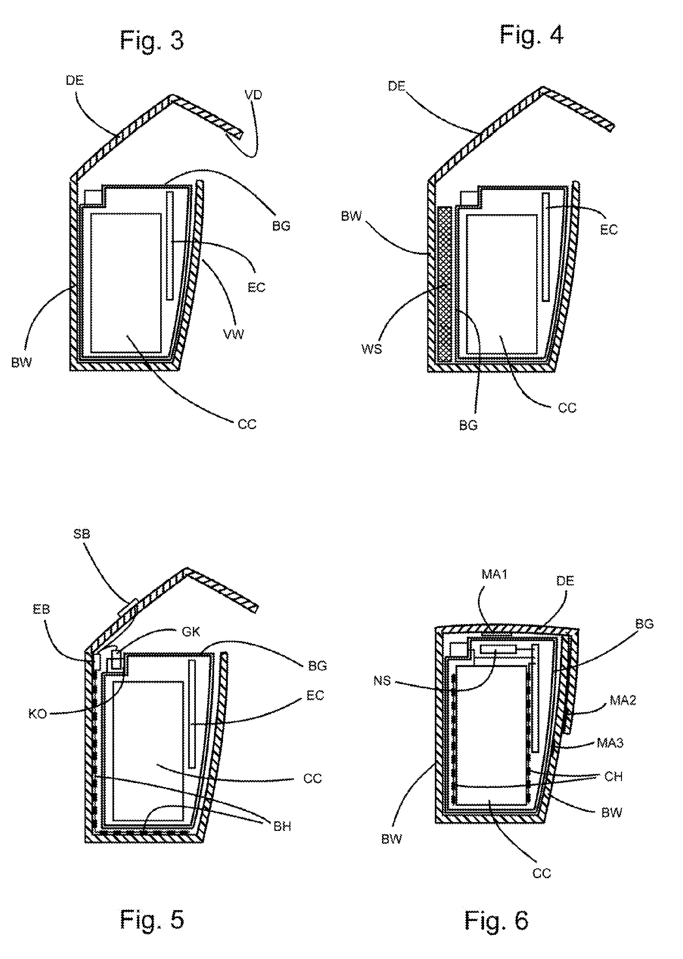

Bei in den Behälter BB eingesetzter Batterie ist diese durch die thermisch isolierende Eigenschaft des die Behälterwände BW bildenden Materials gegen schnelle Auskühlung geschützt, insbesondere bei durch den Deckel DE abgedeckter Behälteröffnung BO. In Fig. 3 ist ein Querschnitt durch eine Batterieanordnung gemäß einer ersten einfachen Ausführung dargestellt, wobei schematisch als Inhalt des Batteriegehäuses eine elektrochemische Zelle CC und eine Batterieelektronik EC innerhalb des Batteriegehäuses BG dargestellt sind. Die Batterieelektronik kann beispielsweise die Zelle CC gegen Beschädigung durch Überhitzung Tiefentladung oder Überladung schützen.

Sofern die rein passive thermische Isolierung durch den Behälter BB nicht als ausreichend zu erwarten ist, kann zusätzlich eine Heizeinrichtung vorgesehen sein, welche auf die eigentlich gegen Auskühlung zu schützende Zelle CC des elektrochemischen Elements der Batterie in dem Sinne einwirkt, dass diese Zelle nicht unerwünscht stark abkühlt und/oder nach bereits gegebener Abkühlung die Zelle erwärmt wird.

In Fig. 4 ist eine erste Ausführung mit einer Heizeinrichtung in Form eines Wärmespeichers WS dargestellt, welcher innerhalb des Behälters BB zwischen einer Behälterwand BW und dem Batteriegehäuse BA angeordnet ist und vorteilhafterweise eine flache Form besitzt. Der Wärmespeicher WS kann in einfacher Ausführung ein Wärmespeichermaterial, beispielsweise ein Gel nach Art eines Gelkissens, ohne Phasenübergang enthalten. In bevorzugter Ausführung kann der Wärmespeicher WS ein Material enthalten, welches aus einer flüssigen Phase zur Auskristallisierung aktivierbar ist und bei dem Phasenübergang Kristallisationswärme erzeugt und auch an die Batterie BA abgibt, beispielsweise eine übersättigte Salzlösung. Der Wärmespeicher WS ist zur Wiederaufladung mit extern zugeführter Wärme vorteilhafterweise aus dem Behälter WB entnehmbar. Der Behälter ist zur Aufnahme von genau einer Batterie ausgebildet.

Fig. 5 zeigt eine Ausführung mit einer elektrisch betriebenen Behälter-Heizeinrichtung BH innerhalb des Behälters BW, welche aus der in den Behälter eingesetzten Batterie elektrisch gespeist ist. Die Behälterheizung BH ist vorteilhafterweise als eine dünne Schicht entlang einer oder mehrerer Innenflächen der Behälterwände BW angeordnet und kann insbesondere eine Heizfolie, beispielsweise mit Heizelementen auf einem flexiblen Träger, enthalten. Die Heizelemente der Behälter-Heizeinrichtung BH sind über Gegenkontakte GK mit Kontakten KO der in den Behälter eingesetzten Batterie verbindbar. Zur Minimierung der aus der Batterie für die Behälter-Heizeinrichtung entnommenen elektrischen Energie kann eine elektronische Steuereinrichtung EB als Teil der Behälter-Heizeinrichtung in dem Behälter BB vorgesehen sein, welche die aus der Batterie für die Behälter-Heizeinrichtung entnommene und in Wärme umgesetzte Energie bedarfsgerecht steuert. Für die Steuerung der Heizleistung der Behälter-Heizeinrichtung können insbesondere Temperatursensoren vorgesehen sein, wofür im skizzierten Beispiel ein Umgebungs-Temperatursensor SB am Deckel DE des Behälters eingezeichnet ist. Der Umgebungs-Temperatursensor kann auch an anderer Stelle des Behälters angeordnet sein. Zusätzlich kann ein thermisch mit dem Batteriegehäuse gekoppelter Temperatursensor auf Seiten des Behälters und/oder soweit über die Kontakte KO und Gegenkontakte GK von außen abfragbar ein Temperatursensor im Innern des Batteriegehäuses, welcher die Temperatur der Zelle CC mißt, vorgesehen sein.

In Fig. 6 ist eine Ausführung dargestellt, bei welcher innerhalb des Batteriegehäuses eine Batterieheizung CH vorgesehen ist, welche vorteilhafterweise in geringem Abstand oder in direktem Kontakt zu der Zelle CC angeordnet sein kann, so dass die in einer solchen Batterie-Heizeinrichtung CH erzeugte Wärme besonders effektiv auf die Zelle CC einwirken kann. Die bedarfsgerechte Steuerung der Batterie-Heizeinrichtung CH kann in die Batterieelektronik EC integriert werden. Ein oder mehrere Temperatursensoren können hierfür innerhalb der Batterie vorgesehen sein und insbesondere die aktuelle Temperatur der Zelle CC, insbesondere an deren Außenfläche messen und die Heizleistung der Batterie-Heizeinrichtung nach Maßgabe der gemessenen Temperatur steuern.

In vorteilhafter Weiterbildung kann vorgesehen sein, dass die Batterie-Heizeinrichtung CH einer gesonderten Aktivierung bedarf, um beispielsweise eine Selbstentladung der Batterie bei nicht thermisch isolierter Lagerung der Batterie in kühler Umgebung, in welcher die von einer Batterie-Heizeinrichtung schnell an die Umgebung abgegeben würde, zu vermeiden. Für eine solche gesonderte Aktivierung sind in dem Ausführungsbeispiel nach Fig. 5 innerhalb des Batteriegehäuses ein Näherungssensor NS und am Deckel DE des Behälters BB ein Magnetelement MA1 vorgesehen. Bei in den Behälter eingesetzter Batterie und geschlossenem Deckel DE erkennt der Detektor NS das Vorhandensein des Magnetelements MA1 und aktiviert die Batterie-Heizeinrichtung, welche dann bedarfsgerecht und mit geringen Wärmeverlusten ein Auskühlen der Zelle CC verhindert bzw. eine abgekühlte Zelle CC auf eine vorgesehene Mindesttemperatur erwärmt. Das Magnetelement MA1 kann beispielsweise ein weichmagnetisches Teil sein, auf welches ein Magnetfeld des Sensors NS reagiert. In anderer Ausführung kann das magnetische Element MA1 ein Permanentmagnet sein, welcher auf ein magnetisch aktivierbares Schaltelement als Näherungssensor NS, beispielsweise einen Reed-Schalter oder ein Hall-Sensorelement einwirkt. Näherungssensor und magnetisches Element können auch an anderer Stelle des Behälters und der Batterie in korrespondierenden Positionen angeordnet sein, wofür in Fig. 5 für das Magnetelement beispielsweise die Positionen MA2 im Verschlussbereich des Deckels oder MA3 an einer Innenseite einer Behälterwand BW dargestellt sind, wobei in letzterem Falle eine Aktivierung auch erfolgen kann, ohne dass der Deckel DE korrekt verschlossen ist. Vorteilhafterweise können im Gerät entsprechende Aktivierungsmittel an äquivalenten Positionen einer Batterieaufnahme im Gerät vorgesehen sein, so dass die Batterie-Heizeinrichtung CH auch bei in das Gerät eingesetzter Batterie aktivierbar ist und, beispielsweise bei Ablage des Geräts in kalter Umgebung während einer Einsatzpause ein unerwünschtes Abkühlen der Zelle CC verhindert wird. Hingegen ist die Batterieheizung bei frei liegender Batterie nicht aktiviert und eine unerwünscht hohe Energieentnahme aus der Zelle mit hohen Wärmeverlusten an die Umgebung kann vermieden werden.

In nicht dargestellter Ausführungsform können die Aktivierungsmittel auch über Gegenkontakte mit den Kontakten KO verbindbaren elektrischen Mitteln auf Seiten des Behälters BB gegeben sein, indem beispielsweise solche Aktivierungsmittel eine Kontaktbrücke zwischen einem Batteriepol und einem Steuerkontakt der Batterie herstellen und auf diese Weise der Batterieelektronik EC signalisieren, dass die Batterie in einen thermisch isolierenden Behälter eingesetzt sein. In wieder anderer Ausführung können Aktivierungsmittel auch in Form eines bei in den Behälter eingesetzter Batterie betätigten mechanischen Schalters am Batteriegehäuse gegeben sein.

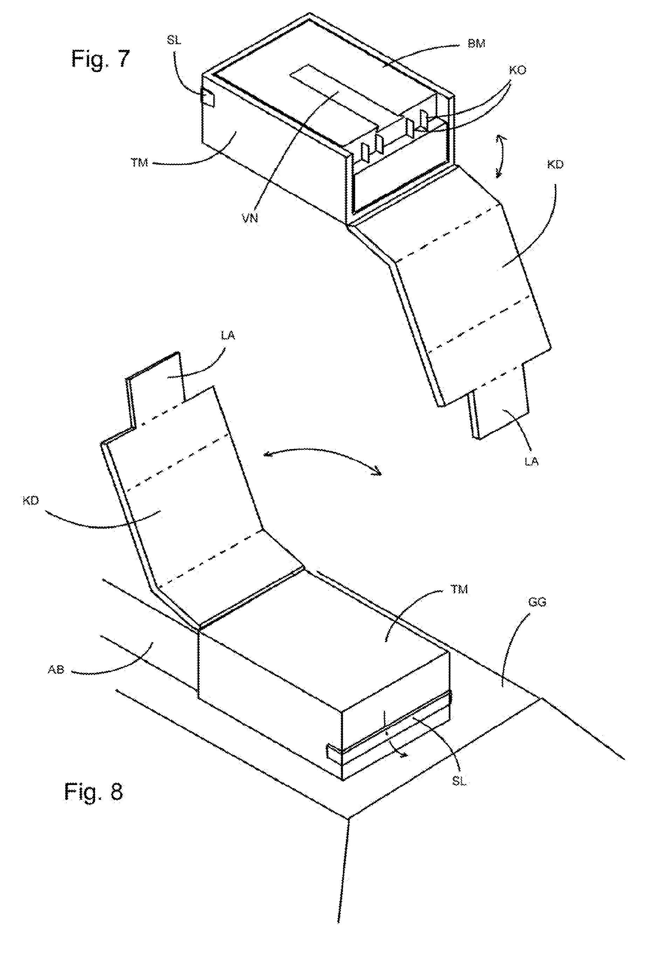

In Fig. 7 ist eine Batterieanordnung mit einer Batterie BM dargestellt, welche an mehreren Seiten von isolierenden Wandflächen eines Behälters TM umgeben ist. Die Batterie sei im Beispielsfall als im wesentlichen quaderförmig angenommen und der Behälter TM umgibt mit isolierenden Wänden das Gehäuse der Batterie BM an vier von sechs Quaderseiten. Der Behälter TM sei zum Verbleib an dem Batteriegehäuse auch bei einer Verbindung der Batterie mit einem Gerät vorgesehen. Zwei der sechs Quaderseiten des Batteriegehäuses sind freigelegt und durch schwenkbar oder klappbar mit dem am Gehäuse verbleibenden Teil des Behälters verbundene, thermisch isolierende Flächen KD durch Verlagerung der Flächen KD über die in Fig. 7 frei liegenden Flächen des Batteriegehäuses abdeckbar. Die verschwenkbaren, die in Fig. 7 frei liegenden Quaderseiten in einer geschlossenen Behältersituation als Transportstellung abdeckenden thermisch isolierenden Flächen KD können beispielsweise über eine Lasche LA und eine an dem Behälter TM vorgesehene Schlaufe SL oder andere an sich bekannte Befestigungsmittel in der geschlossenen Transportstellung reversibel festgelegt werden.

In der in Fig. 7 dargestellten geöffneten Behälterstellung ist an einer der drei liegenden Quaderseiten des Batteriegehäuses eine Verbindungsnut VN als Beispiel für mögliche mechanische Verbindungsmittel zu einem Gerät dargestellt. Elektrische Kontakte KO sind bei in Öffnungsstellung befindlichen Isolierflächen KD zugänglich.

Die Batterieanordnung nach Fig. 7 kann in der dargestellten Öffnungsstellung des thermisch isolierenden Behälters beispielsweise über die Verbindungsnut VN als eine erste Verbindungsstruktur in Zusammenwirken mit einer zweiten, komplementär geformten Verbindungsstruktur eines Gerätegehäuses GG mit einem solchen Gerätegehäuse, wie in Fig. 8 schematisch dargestellt, verbunden werden, wobei die elektrischen Kontakte KO des Batteriegehäuses mit Gegenkontakten in einem Anschlussbereich AB des Gerätegehäuses in elektrische Verbindung gebracht sind. Die Batterieanordnung kann in der in Fig. 8 dargestellten, mit einem Gerät als elektrischem Verbraucher verbundenen Zustand an dem Gerät durch nicht mit eingezeichnete Arretiermittel gesichert sein. Die in Fig. 7 als frei liegend dargestellten Quaderseiten des Batteriegehäuses sind in dem verbundenen Zustand nach Fig. 8 durch Gegenflächen des Gerätegehäuses GG im wesentlichen abgedeckt.

Die schwenkbar zum Batteriegehäuse an dem am Gerätegehäuse verbleibenden Behälter TM angelenkten Isolierflächen KD sind vorteilhafterweise in der Betriebsstellung nach Fig. 8 reversibel festlegbar, wofür beispielsweise die Isolierflächen KD über die Batterieanordnung, wie durch den Doppelpfeil in Fig. 8 angedeutet, in Richtung der Schlaufe SL umgeschwenkt und dort festgelegt werden können. Eine Festlegung kann auch an dem Gerätegehäuse GG selbst vorgesehen sein. Eine Festlegung der verschwenkbaren Isolierflächen KD ist vorteilhaft, um die Arbeit mit dem Gerät nicht zu behindern Die Art der Festlegung kann auf verschiedene Weise erfolgen. Durch die bleibende Verbindung der schwenkbaren Isolierflächen KD mit dem das Batteriegehäuse auch in der Betriebsstellung nach Fig. 8 umgebenden thermisch isolierenden Wänden des Behälters TM können keine Teile de thermisch isolierenden Behälters verloren gehen und nach Lösen der Verbindung zum Gerät die allseitige thermische Isolierung wieder hergestellt werden.

Der Behälter TM kann vorteilhafterweise lösbar mit dem Batteriegehäuse verbunden sein, beispielsweise über Klettverbindungen, Haftflächen, Druckknopfverbindungen u.ä. oder durch elastische Vorspannung des isolierenden Behältermaterials beim Aufziehen auf das Batteriegehäuse. Insbesondere bei Batteriegehäusen, welche nur an einem Ende mit einem Gerätegehäuse in Betriebsstellung verbunden sind, kann ein thermisch isolierender Behälter nach Art eines elastischen Strumpfes über das Gehäuse gezogen und in der in Betriebsstellung mit einem Gerätegehäuse verbundenen Batterie zurückgezogen oder an der Verbindungsseite umgestülpt sein.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Batterieanordnung mit einer wenigstens ein elektrochemisches Element in einem geschlossenen Batteriegehäuse enthaltenden Batterie und einem die Batterie umgebenden und von der Batterie lösbaren Behälters, welcher an zumindest dem überwiegenden Teil seiner das Batteriegehäuse umgebenden Wandfläche thermisch isolierendes Material mit einer gegenüber dem Batteriegehäuse niedrigeren Wärmedurchgangszahl aufweist.

2. Batterieanordnung nach Anspruch 1, **dadurch gekennzeichnet, dass** das elektrochemische Element eine Li-lonen-Zelle ist.

3. Batterieanordnung nach Anspruch 1 oder 2, **dadurch gekennzeichnet, dass** der Behälter zumindest überwiegend aus einem flexiblen Material besteht.

4. Batterieanordnung nach Anspruch 3, **dadurch gekennzeichnet, dass** das flexible Material in Bahnform vorliegt.

5. Batterieanordnung nach Anspruch 4, **dadurch gekennzeichnet, dass** mehrere Bahnen zu dem Behälter miteinander verbunden sind.

6. Batterieanordnung nach einem der Ansprüche 1 bis 5, **dadurch gekennzeichnet, dass** das flexible Material aus einem vorzugsweise geschäumten Elastomer besteht.

7. Batterieanordnung nach Anspruch 6, **dadurch gekennzeichnet, dass** das geschäumte Elastomer mit einer Textilgewebe kaschiert ist.

8. Batterieanordnung nach einem der Ansprüche 1 bis 7, **dadurch gekennzeichnet, dass** der Behälter taschenförmig ausgebildet ist.

9. Batterieanordnung nach Anspruch 8, **dadurch gekennzeichnet, dass** der Behälter eine verschließbare Öffnung zum Entnehmen und Einsetzen einer Batterie aufweist.

10. Batterieanordnung nach einem der Ansprüche 1 bis 9, **dadurch gekennzeichnet, dass** die Form des Behälters an die Kontur der Batterie angepasst ist.

11. Batterieanordnung nach einem der Ansprüche 1 bis 10, **dadurch gekennzeichnet, dass** an dem Behälter Tragvorrichtungen vorgesehen sind, welche zum Tragen der Batterieanordnung am Körper einer Person ausgebildet sind.

12. Batterieanordnung nach Anspruch 11, **dadurch gekennzeichnet, dass** die Tragvorrichtungen eine Gürtelbefestigung und/oder einen Traggurt enthalten.

13. Batterieanordnung nach einem der Ansprüche 1 bis 12, **dadurch gekennzeichnet, dass** die Batterie zur Verbindung mit einem Gerät vollständig von dem Behälter lösbar ist.

14. Batterieanordnung nach einem der Ansprüche 1 bis 12, **dadurch gekennzeichnet, dass** der Behälter von wenigstens einer Fläche des Gehäuses der Batterie lösbar ist und mit wenigstens einer anderen Fläche des Gehäuses auch für die Dauer des Betriebs der Batterie in einem Gerät verbunden bleibt.

15. Batterieanordnung nach einem der Ansprüche 1 bis 14, **dadurch gekennzeichnet, dass** eine aus dem elektrochemischen Element gespeiste und auf das elektrochemische Element wirkende Heizeinrichtung vorgesehen ist.

16. Batterieanordnung nach Anspruch 15, **dadurch gekennzeichnet, dass** eine Hüllkörper-Heizeinrichtung als ein Teil des Behälters ausgebildet ist und am Behälter Gegenkontakte zu Kontakten der Batterie vorgesehen sind.

17. Batterieanordnung nach Anspruch 16, **dadurch gekennzeichnet, dass** die Behälter-Heizeinrichtung flächig an zumindest einem Teil der Innenfläche des Behälters angeordnet ist.

18. Batterieanordnung nach einem der Ansprüche 15 bis 17, **dadurch gekennzeichnet, dass** eine Batterie-Heizeinrichtung in das Batteriegehäuse integriert ist.

19. Batterieanordnung nach Anspruch 18, **dadurch gekennzeichnet, dass** die Batterie-Heizeinrichtung über Aktivierungsmittel des Behälters bei in den Behälter eingesetzter Batterie aktivierbar ist.

20. Batterieanordnung nach Anspruch 19, **dadurch gekennzeichnet, dass** die Aktivierungsmittel über Gegenkontakte des Behälters zu Kontakten der Batterie mit der Batterie-Heizeinrichtung verbindbar sind.

21. Batterieanordnung nach Anspruch 19, **dadurch gekennzeichnet, dass** die Aktivierungsmittel ohne elektrisch leitende Verbindung mit der Heizeinrichtung zusammenwirken.

22. Batterieanordnung nach Anspruch 21, **dadurch gekennzeichnet, dass** die Heizeinrichtung einen mit den Aktivierungsmitteln zusammen wirkenden Näherungssensor enthält.

23. Batterieanordnung nach Anspruch 21 oder 22, **dadurch gekennzeichnet, dass** die Aktivierungsmittel eine Magnetanordnung enthalten.

24. Batterieanordnung nach einem der Ansprüche 15 bis 23, **dadurch gekennzeichnet, dass** der Behälter eine Verschlusseinrichtung aufweist und die Heizeinrichtung nur bei geschlossener Verschlusseinrichtung aktivierbar ist.

25. Batteriebehälter zur Verwendung in Verbindung mit einer Batterie in einer Batterieanordnung nach einem der Ansprüche 1 bis 22.
